# EUROPÄISCHE PATENTSCHRIFT

(11) **EP 1 161 850 B1**
(45) Veröffentlichungstag und Bekanntmachung des Hinweises auf die Patenterteilung: **19.12.2007**
(21) Anmeldenummer: 00916808.9
(22) Anmeldetag: 13.03.2000
(51) Int. Cl.: H04Q 7/38, G07F 7/10, H04L 29/06

(54) **VERFAHREN ZUR VERTEILUNG VON SCHLÜSSELN AN TEILNEHMER VON KOMMUNIKATIONSNETZEN**
METHOD OF DISTRIBUTING KEYS TO SUBSCRIBERS OF COMMUNICATIONS NETWORKS
PROCEDE DE DISTRIBUTION DE CLES A DES ABONNES DE RESEAUX DE COMMUNICATION

(30) Priorität: 12.03.1999 DE 19911221
(43) Veröffentlichungstag der Anmeldung: 12.12.2001
(73) Patentinhaber: T-Mobile Deutschland GmbH, 53227 Bonn (DE)
(72) Erfinder: BRUNE, Peter, D-53340 Meckenheim (DE); SASSE, Andreas, D-53773 Hennef (DE)
(74) Vertreter: Riebling, Peter
(86) Internationale Anmeldenummer: PCT/DE2000/000752
(87) Internationale Veröffentlichungsnummer: WO 2000/056101

(56) Entgegenhaltungen:
- DE-A- 19 718 103
- "GSM TECHNICAL SPECIFICATION GSM 11.14 VERSION 5.7.0" EUROPEAN TELECOMMUNICATION STANDARD,XX,XX, 1. April 1998 (1998-04-01), Seite COMPLETE66 XP002089350

## Beschreibung

Die Erfindung betrifft ein Verfahren zur Verteilung von Schlüsseln an Teilnehmer von Kommunikationsnetzen, insbesondere digitalen Mobilfunknetzen, nach dem Oberbegriff des unabhängigen Patentanspruchs. Mit diesen Schlüsseln kann sich der Nutzer eines Endgeräts z.B. gegenüber einem Mehrwertdiensteknoten des Kommunikationsnetzes authentisieren.

Heute authentisiert sich ein Teilnehmer von Telekommunikationsdiensten beim Zugang zu Mehrwertdiensteknoten wie z. B. einer Mobilbox, durch Eingabe eines Paßworts und Nutzernamens. In GSM-Mobilfunknetzen wird dabei meist durch die Signalisierung die Mobilteilnehmer-Rufnummer (MSISDN) als Nutzemame übertragen, womit eine explizite Angabe durch den Nutzer entfällt.

Die Vergabe und Nutzung des Paßworts (hier gleichbedeutend mit Schlüssel) ist ein kritischer Vorgang, da durch unerwünschte Offenlegung oder bewußtes Ausspähen dem Nutzer erheblicher Schaden durch Mißbrauch zugefügt werden kann. Neue Paßwörter werden daher häufig per Einschreibebrief versandt, was organisatorisch und technisch einen erheblichen Aufwand bedeutet und zugleich einen Zeitverzug, bis ein Paßwort beim Nutzer eintrifft.

Geschieht darüber hinaus der Zugang zum Mehrwertdiensteknoten über unsichere Netze wie z. B. das Internet, besteht die Gefahr, daß Nutzemame und Paßwort unberechtigterweise abgehört und mißbraucht werden.

Die DE-A-197 18 103 offenbart ein Verfahren zur Authentisierung in Datenübertragungssystemen, bei dem auf Anfrage eines Teilnehmers ein Schlüssel in Form einer Transaktionsnummer (TAN) von einem im Datenübertragungssystem vorgesehenen Authentisierungsrechner generiert oder aus einer Datei ausgewählt wird. Der Schlüssel wird von dem Authentisierungsrechner an den Teilnehmer übermittelt und kann dort vom Teilnehmer direkt zur Authentifikation gegenüber dem Authentifikationsrechner verwendet werden. Die Verteilung von mehreren Schlüsseln, die vom Teilnehmer je nach Bedarf verwendet werden können, ist aus diesem Dokument nicht zu entnehmen.

Die Aufgabe der Erfindung besteht darin, ein Verfahren anzugeben, durch welches auf gesichertem Wege eine automatisierte Verteilung von Schlüsseln an Teilnehmer von Kommunikationsnetzen erreicht werden kann.

Erfindungsgemäß wird diese Aufgabe durch die kennzeichnenden Merkmale des unabhängigen Patentanspruchs gelöst.

Der Kern der Erfindung besteht darin, dass die Schlüssel in einer auf Mobilfunkoetzseite vorgesehenen Sicherheitseinrichtung generiert und ggf. abgespeichert werden, und auf Anfrage eines Teilnehmers mindestens ein Schlüssel von der Sicherheitseinrichtung angefordert, dem Teilnehmer zugeordnet und über das Mobilfunknetz an die Mobilstation bzw. das Endgerät des Teilnehmers übertragen wird, wobei der übertragene Schlüssel dem Teilnehmer zugeordnet und im Endgerät und/oder einem Teilnehmeridentitätsmodul (SIM) der Mobilstation zur weitern Verwendung abgespeichert wird.

Das beschriebene Verfahren ist insbesondere geeignet, um auf gesichertem Wege in einem GSM- oder UMTS-Netz automatisiert Schlüssel an mobile Endgeräte zu verteilen und auf der (U)SIM des Teilnehmers zu speichern. Mit diesen Schlüsseln kann sich der Nutzer eines Endgeräts gegenüber einem Mehrwertdiensteknoten authentisieren. Mit der (U)SIM steht ein zugriffsgeschütztes Medium zur Verfügung, um Paßwörter bzw. Schlüssel aus einem Mobilfunknetz abzufragen, zu speichern und bei Bedarf zur Authentisierung zu nutzen.

Durch die elektronische und sichere Verteilung und die damit einhergehende Automatisierung besteht zum einen eine deutliche Aufwandsreduktion und Zeitgewinn gegenüber herkömmlichen Schlüsselverteilungsverfahren, die meist auf bestätigtem Schriftverkehr beruhen. Zum anderen führt der automatisierte Ablauf und damit der Ausschluß menschlicher Aktivitäten bei der Schlüsselgenerierung und Verteilung zu einer Erhöhung der Sicherheit.

Die einfache Verteilung erlaubt darüber hinaus eine häufigere Verteilung von Schlüsseln mit niedrigem Aufwand. Dies ermöglicht die Nutzung auch einfacher Authentisierungsverfahren beim Zugang zu Mehrwertdiensteknoten eines Telekommunikationsnetzes, bei denen z.B. ein bestimmter Schlüssel nur ein einziges Mal verwendet wird.

Der berechtigte Nutzer der (U)SIM kann die Möglichkeit nutzen, den Schlüssel in andere Endgeräte zu transferieren bzw. mit dem mobilen oder anderen Endgeräten über Internet, PSTN oder ISDN auf die Mehrwertdiensteknoten zuzugreifen. Das Authentikationsverfahren zwischen Endgerät und Mehrwertdiensteknoten sowie der Transfer eines Schlüssels vom mobilen Endgerät auf ein anderes kann mit bestehenden Algorithmen gelöst werden und ist nicht Gegenstand der Erfindung.

In einer ersten Ausführungsvariante der Erfindung ist vorgesehen, dass der Nutzer einen neuen Schlüssel bei Bedarf durch eine Kurznachricht (SMS) abruft. Dazu sendet er eine Kurznachricht mit bestimmten Inhalt an eine durch den Netzbetreiber vorgegebene Zieladresse, die einer Sicherheitseinrichtung zugeordnet ist. Als Antwort erhält er von dieser Adresse ein Paßwort im Klartext zurück. Mit diesem Paßwort kann sich der Nutzer nun gegenüber einem Mehrwertdiensteknoten authentisieren.

In einer zweiten Ausführungsvariante der Erfindung, die ein höheres Sicherheitsniveau aufweist, ist vorgesehen, dass durch die Verwendung eines Programms auf der (U)SIM (Kartenapplikation), welches als Client mit dem Mobilfunknetz kommuniziert, alle Kommunikationsvorgänge zwischen Mobilstation und Sicherheitseinrichtung mit einem Ende-zu-Ende Verschlüsselungsverfahren verschlüsselt werden. In vorteilhafter Weise kann das Programm dem Nutzer eine menügeführte Oberfläche auf dem mobilen Endgerät bieten, mit der Schlüssel abgerufen und verwaltet werden können.

Zur Anforderung eines Schlüssels wählt der Nutzer z.B. einen entsprechenden Menüpunkt auf seinem Endgerät. Das Mobilfunknetz antwortet mit einer verschlüsselten Nachricht, die direkt an die Kartenapplikation gerichtet ist. Die Kartenapplikation speichert den Schlüssel in einem geschützten Speicherbereich der (U)SIM ab.

Zur Authentisierung gegenüber einem Mehrwertdiensteknoten wählt der Nutzer nach Eingabe einer PIN z.B. einen entsprechenden Menüpunkt an. Je nach Authentisierungsalgorithmus ist vorgesehen, dass
- der Schlüssel entweder im Klartext angezeigt und kann vom Nutzer weiterverwendet werden kann;
- der Schlüssel direkt zum Mehrwertdiensteknoten übertragen wird;
- der Schlüssel zu einem anderen Endgerät transferiert und dort weiterverwendet werden kann.

Vorteilhafte Ausgestaltungen und Weiterbildungen der Erfindung sind in den abhängigen Patentansprüchen angegeben.

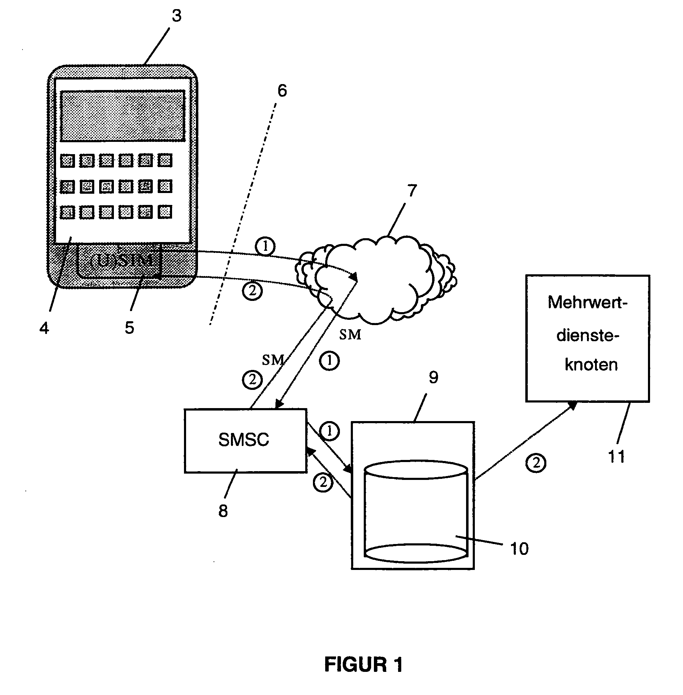

Im folgenden wird die Erfindung anhand eines Beispiels unter Bezugnahme auf eine Zeichnungsfigur näher beschrieben. Aus dem Beispiel, der Zeichnung und ihrer Beschreibung gehen weitere Merkmale und Vorteile der Erfindung hervor
Figur 1 zeigt eine Darstellung der beteiligten Systeme zur Durchführung des Verfahrens.

Die Mobilstation 3, welche ein Endgerät 4 umfasst, beherbergt in bekannter Weise die (U)SIM 5, auf der die Schlüssel zur Nutzerauthentikation gespeichert werden. Die Sicherheitseinrichtung umfasst einen Sicherheits-Server 9, der die Schlüssel nach einem vom Betreiber gewählten Algorithmus erzeugt, in einer Datenbank 10 speichert und die Schlüssel auf Anforderung 1 eines Teilnehmers an die (U)SIM 5 und die vom Teilnehmer nutzbaren Mehrwertdiensteknoten 11 verteilt.

Das Short Message Service Center 8 des Mobilfunknetzes 7 übermittelt die Schlüssel in Form von Kurznachrichten (SM) 2 zwischen Sicherheits-Server 9 und Mobilstation 3. Dies ist hier nur beispielhaft angegeben. Als Übermittlungseinrichtungen können z. B. auch GPRS-Knoten verwendet werden.

Gemäss einer ersten beim erfindungsgemässen Verfahren angewandten Sicherheitsstufe fordert der Teilnehmer einen Schlüssel über seine Mobilstation 3 durch eine Kurznachricht 1 an.

Der Sicherheits-Server 9 wertet die Anforderung aus, indem die Absendeadresse (MSISDN) des Teilnehmers auf Berechtigung geprüft wird, und sendet den oder die Schlüssel in einer Kurznachricht 2 an die Mobilstation 3, wo sie auf der (U)SIM 5 gespeichert wird. Darüber hinaus sendet der Sicherheits-Server 9 den Schlüssel an einen oder mehrere Mehrwertdiensteknoten 11. Die Schlüsselverteilung ist damit beendet. Der Nutzer kann sich nun je nach gewähltem Endgerät 4 und Zugangsweg (Mobilfunk, ISDN, Internet, etc.) gegenüber dem Mehrwertdiensteknoten 11 authentisieren.

Bei dieser niedrigen ersten Sicherheitsstufe basiert die Sicherheit der Schlüsselverteilung auf der Abhörsicherheit des GSM-/UMTS-Netzes und der Nutzeridentifikation per MSISDN. Einmal auf der (U)SIM gespeichert sind die Schlüssel über die Standard-PIN geschützt.

Bei der zweiten, erhöhten Sicherheitsstufe kann das SIM Application Toolkit (SAT) nach GSM 11.14 eingesetzt werden. Dazu wird eine SAT-Applikation auf die (U)SIM 5 eingebracht, die in dieser Client-Server-Konfiguration mit dem Sicherheits-Server 9 über das GSM- oder UMTS-Netz 7 kommuniziert.

Der Nutzer fordert Schlüssel über sein Endgerät 4 menüunterstützt über die SAT-Applikation an. Dazu muß er sich gegenüber der (U)SIM 5 mit einer zweiten PIN identifizieren, die er z.B. über die Tastatur des Endgeräts 4 eingibt. Danach versendet die SAT-Applikation eine verschlüsselte Anforderung 1 an den Sicherheits-Server 9, der die Anforderung verarbeitet. Der Sicherheits-Server 9 prüft die verschlüsselte Anforderung auf Echtheit anhand der Verschlüsselung sowie der Absendeadresse (MSISDN).

Bei positiv ausgefallener Prüfung erzeugt der Sicherheits-Server 9 den oder die Schlüssel für den Nutzer und sendet sie an die SAT-Applikation der (U)SIM 5 zurück. Die SAT-Applikation nimmt die Schlüssel entgegen und speichert sie in einem besonders geschützten Bereich der (U)SIM 5 ab. Darüber hinaus sendet der Sicherheits-Server 9 den Schlüssel an einen oder mehrere Mehrwertdiensteknoten 11.

Der Zugriff auf die Schlüssel ist wiederum menügesteuert nach Eingabe einer PIN über die Kartenapplikation möglich, die einen ungebrauchten Schlüssel auf dem Display des Endgeräts 4 anzeigt oder auf Wunsch in einem ungeschützten SIM-Kartenspeicherbereich ablegt. Von dort kann dieser Schlüssel in einen PC/Laptop mittels Standard-Zugriffssoftware ausgelesen werden, z. B. mittels Chipkartenleser oder Infrarot-Schnittstelle des GSM-/UMTS-Endgeräts.

Alternativ und je nach Sicherheitsanforderung kann der Schlüssel auch vor dem Nutzer verborgen bleiben und vertraulich zwischen (U)SIM 5 und Mehrwertdiensteknoten 11 bzw. von der (U)SIM 5 zum Laptop/PC zwecks späterer Verwendung übertragen werden.

Ein besonderes Kennzeichen der zweiten Sicherheitsstufe ist eine zusätzliche Verschlüsselung der ausgetauschten Kurznachrichten 1, 2 zwischen dem Sicherheits-Server 9 (Server-SW) und der Software auf der (U)SIM 5 (Client-SW). Dadurch ist eine Ende-zu-Ende-Sicherheit zwischen Server-SW und Client-SW gegeben. Der Nutzer hat dabei vorzugsweise keine Kenntnis der dazu notwendigen Schlüssel. Als Verschlüsselungsalgorithmen zwischen Client und Server können Standardverfahren wie z. B. Triple-DES oder RSA zum Einsatz kommen.

Die für die Zusatzverschlüsselung notwendigen Schlüssel werden einmalig bei Personalisierung der (U)SIM eingebracht sowie auf den Sicherheits-Server geladen.

### Zeichnungslegende

- 1: Signalfluss: Schlüssel anfordern
- 2: Signalfluss: Schlüssel laden
- 3: Mobilstation
- 4: Endgerät
- 5: (U)SIM
- 6: Luftschnittstelle
- 7: Mobilfunknetz
- 8: Kurznachrichtendienst-Zentrale
- 9: Sicherheitseinrichtung (Server)
- 10: Datenbank
- 11: Mehrwertdiensteknoten

## Patentansprüche

1. Verfahren zur Verteilung von Schlüsseln an Teilnehmer digitaler Mobilfunknetze (7), wobei die Schlüssel in einer auf Mobilfunknetzseite vorgesehenen Sicherheitseinrichtung (9) generiert und gegebenenfalls gespeichert werden und auf Anfrage eines Teilnehmers mindestens ein Schlüssel von der Sicherheitseinrichtung (9) angefordert und über das Mobilfunknetz (7) an eine Mobilstation (3) oder ein Endgerät (4) des Teilnehmers übertragen wird,
**dadurch gekennzeichnet,**
**dass** der übertragene Schlüssel dem Teilnehmer zugeordnet und im Endgerät (4) und/oder einem Teilnehmeridentitätsmodul SIM (5) der Mobilstation (3) abgespeichert wird.

2. Verfahren nach Anspruch 1, **dadurch gekennzeichnet,**
**dass** auf dem Teilnehmeridentitätsmodul SIM (5) der Mobilstation (3) eine SAT-Applikation eingerichtet ist, die eine zusätzliche Ende-Zu-Ende-Verschlüsselung des zwischen Mobilstation (3) und Sicherheitseinrichtung (9) übertragenen Schlüssels vornimmt.

3. Verfahren nach Anspruch 2, **dadurch gekennzeichnet,**
**dass** sich der Teilnehmer zur Nutzung der SAT-Applikation gegenüber dem Teilnehmeridentitätsmodul SIM (5) durch Eingabe einer PIN identifizieren muss.

4. Verfahren nach einem der Ansprüche 1 bis 3, **dadurch gekennzeichnet,**
**dass** der übertragene Schlüssel auf einem geschützten Speicherbereich des Teilnehmeridentitätsmoduls SIM (5) abgespeichert wird.

5. Verfahren nach einem der Ansprüche 1 bis 4, **dadurch gekennzeichnet,**
**dass** die Übertragung des Schlüssels über einen Verkehrskanal des Mobilfunknetzes (7) erfolgt.

6. Verfahren nach einem der Ansprüche 1 bis 4, **dadurch gekennzeichnet,**
**dass** die Übertragung des Schlüssels über einen Signalisierungskanal des Mobilfunknetzes (7) in Form einer Kurznachricht SM erfolgt.

7. Verfahren nach einem der Ansprüche 1 bis 6, **dadurch gekennzeichnet,**
**dass** bei Anforderung des Schlüssel die Berechtigung des Teilnehmers durch Auswertung einer Mobilteilnehmer-Rufnummer MSISDN des Teilnehmers geprüft wird.

8. Verfahren nach einem der Ansprüche 1 bis 7, **dadurch gekennzeichnet,**
**dass** die Sicherheitseinrichtung (9) den an den Teilnehmer übermittelten Schlüssel an einen oder mehrere Mehrwertdiensteknoten (11) sendet.

## Claims

1. Method for distributing codes to subscribers of digital mobile telephone networks (7), the codes being generated and if occasion arises stored in a security device (9) provided on the mobile telephone network side and, upon inquiry by a subscriber, at least one code being requested from the security device (9) and transmitted via the mobile telephone network (7) to a mobile station (3) or a terminal (4) of the subscriber, **characterised in that** the transmitted code is assigned to the subscriber and stored in the terminal (4) and/or a subscriber identity module SIM (5) of the mobile station (3).

2. Method according to claim 1, **characterised in that** on the subscriber identity module SIM (5) of the mobile station (3) is set up a SAT application which performs additional end-to-end encryption of the code transmitted between mobile station (3) and security device (9).

3. Method according to claim 2, **characterised in that** the subscriber must identify himself by entry of a PIN in relation to the subscriber identity module SIM (5) for use of the SAT application.

4. Method according to one of claims 1 to 3, **characterised in that** the transmitted code is stored on a protected storage area of the subscriber identity module SIM (5).

5. Method according to one of claims 1 to 4, **characterised in that** transmission of the code is effected via a traffic channel of the mobile telephone network (7).

6. Method according to one of claims 1 to 4, **characterised in that** transmission of the code is effected via a signalling channel of the mobile telephone network (7) in the form of a short message SM.

7. Method according to one of claims 1 to 6, **characterised in that**, upon request of the code, the subscriber's authorisation is checked by evaluation of a mobile subscriber telephone number MSISDN of the subscriber.

8. Method according to one of claims 1 to 7, **characterised in that** the security device (9) sends the code transmitted to the subscriber, to one or more value-added service nodes (11).

## Revendications

1. Procédé de distribution de clés à des abonnés de réseaux radiotéléphoniques mobiles numériques (7), selon lequel les clés sont générées et éventuellement mises en mémoire dans un dispositif de sécurité (9) prévu côté réseau mobile, et à la demande d'un abonné au moins une clé est demandée au dispositif de sécurité (9) et est transmise par l'intermédiaire du réseau mobile (7) à une station mobile (3) ou à un terminal (4) de l'abonné,
**caractérisé en ce que** la clé transmise est attribuée à l'abonné et est mise en mémoire dans le terminal (4) et/ou dans un module d'identité d'abonné SIM (5) de la station mobile (3).

2. Procédé selon la revendication 1, **caractérisé en ce qu'**il est prévu, installée sur le module d'identité d'abonné SIM (5) de la station mobile (3), une application SAT qui réalise un codage de bout en bout supplémentaire de la clé transmise entre la station mobile (3) et le dispositif de sécurité (9).

3. Procédé selon la revendication 2, **caractérisé en ce que** l'abonné doit s'identifier par rapport au module d'identité d'abonné SIM (5), pour utiliser l'application SAT, en entrant un PIN (numéro d'identification personnel).

4. Procédé selon l'une des revendications 1 à 3, **caractérisé en ce que** la clé transmise est mise en mémoire sur une zone de mémoire protégée du module d'identité d'abonné SIM (5).

5. Procédé selon l'une des revendications 1 à 4, **caractérisé en ce que** la transmission de la clé se fait par l'intermédiaire d'un canal de trafic du réseau mobile (7).

6. Procédé selon l'une des revendications 1 à 4, **caractérisé en ce que** la transmission de la clé par l'intermédiaire d'un canal de signalisation du réseau mobile (7) se fait sous la forme d'un message court SM.

7. Procédé selon l'une des revendications 1 à 6, **caractérisé en ce que** lorsque la clé est demandée, l'autorisation de l'abonné est vérifiée grâce à l'analyse d'un numéro d'appel d'abonné mobile MSISDN de l'abonné.

8. Procédé selon l'une des revendications 1 à 7, **caractérisé en ce que** le dispositif de sécurité (9) envoie à un ou plusieurs noeuds de service à valeur ajoutée (11) la clé transmise à l'abonné.
